# EUROPÄISCHE PATENTSCHRIFT

(11) **EP 3 527 868 B1**
(45) Veröffentlichungstag und Bekanntmachung des Hinweises auf die Patenterteilung: **18.10.2023**
(21) Anmeldenummer: 19152832.2
(22) Anmeldetag: 21.01.2019
(51) Int. Cl.: F16L 55/38, F16L 55/40

(54) **MOLCH FÜR ROHRLEITUNGEN**
PIPELINE PIG
RACLEUR POUR TUYAUTERIE

(30) Priorität: 24.01.2018 DE 102018101608
(43) Veröffentlichungstag der Anmeldung: 21.08.2019
(60) Teilanmeldung: 23196372.9
(73) Patentinhaber: Rosen Swiss AG, 6370 Stans (CH)
(72) Erfinder: Grote, Matthias, 49811 Lingen (DE); Fielers, Frank, 49808 Lingen (DE); Mönster, Tilmann, 49838 Lengerich (DE)
(74) Vertreter: Wischmeyer, André

(56) Entgegenhaltungen:
- EP-A1- 1 637 833
- DE-A1- 3 719 492
- DE-A1-102008 035 996
- JP-A- H05 306 795
- US-A1- 2003 136 195
- US-A1- 2003 198 374
- US-A1- 2010 017 980
- US-A1- 2016 273 992
- US-B2- 9 176 052

## Beschreibung

Die vorliegende Erfindung betrifft einen Molch für Rohrleitungen, insbesondere in Form eines Reinigungs- oder Inspektionsmolchs, mit einer Zentraleinheit und zumindest einer in Längsrichtung der Zentraleinheit vorderen und einer hinteren Dichteinheit, sowie mit einer eine Mehrzahl von Sensorarmen aufweisenden Sensorvorrichtung, die insbesondere zur Messung einer Geometrie oder Beschaffenheit der Rohrleitung vorgesehen ist, wobei zumindest eine der Dichteinheiten und vorzugsweise die Zentraleinheit zumindest abschnittsweise aus einem Kunststoffmaterial gefertigt sind.

Ein solcher Molch ist aus dem Stand der Technik US 9 176 052 B2 oder EP 1 637 833 A1 bekannt.

Aus dem Stand der Technik gemäß WO 2013/102807 ist ein gattungsgemäßer Molch bekannt, welcher abschnittsweise durch die Verwendung von Kunststoff so leicht ausgebildet ist, dass bei einer Zerstörung des Molches im Betrieb die einzelnen Teile mit der in der Rohrleitung transportierten Flüssigkeit ausgeschwemmt werden können.

Als Mittel zur Regulierung der Geschwindigkeit des mit dem Fluid in der Rohrleitung transportierten Molchs ist einerseits die Auslegung der Sensorarme und die Ausbildung von den freien Rohrleitungsquerschnitt in einem zentralen Bereich abdeckenden Scheiben, sogenannten "Disks", vorgesehen. In einer Variante mit einem Kunststoffschaumpfropfen wird ergänzend die Verwendung eines "künstlichen Muskels" vorgesehen, der einen Durchgang durch die Zentraleinheit verjüngen und damit den Vortrieb variieren kann. Die dargestellten Molche sind jedoch für Gasleitungen mit Niedrigdruck oder für Rohrleitungen mit niedrigen Fluidgeschwindigkeiten wenig geeignet, da einerseits der freie Rohrleitungsquerschnitt entweder nicht ausreichend abgedeckt wird oder die Reibung aufgrund des Schaumstoffpfropfens an der Rohrwand zu groß ist. Insbesondere bei der Durchfahrt von Bögen oder bei der Überfahrt von Schweißnähten entstehen Reibungsspitzen, die zu einer Verringerung der Geschwindigkeit, somit zu einem unruhigerem Lauf und schlechteren Messergebnissen führen können.

Es ist Aufgabe der vorliegenden Erfindung, diese Nachteile zu vermeiden.

Die Aufgabe wird gelöst durch einen Gegenstand gemäß Anspruch 1. Vorteilhafte Ausgestaltungen der Erfindung sind den auf diese Ansprüche rückbezogenen Unteransprüchen sowie der nachfolgenden Beschreibung zu entnehmen.

Die eingangs gestellte Aufgabe wird durch einen gattungsgemäßen Molch gelöst, der sich dadurch auszeichnet, dass die Sensorvorrichtung einen in dem oder entlang des Sensorarms verlaufenden Lichtleiter aufweist, der zumindest zur Messung der Krümmung eines Sensorarms ausgebildet ist. Ein solcher Lichtleiter insbesondere in Form wenigstens einer optischen Faser lässt sich optimal an einen aus einem Kunststoffmaterial aufgebauten Sensorarm anpassen und insbesondere in einen solchen integrieren, so dass unter Verzicht auf schwerere metallische Sensorelemente ein besonders leichter Sensorkranz mit einer Vielzahl von Sensorarmen geschaffen ist. Gleichzeitig sind die elastischen Eigenschaften des Sensorarmes durch den in diesem oder entlang des Sensorarms verlaufenden und insbesondere ebenfalls aus Kunststoff mit ausgebildeten Lichtleiter wenig oder gar nicht beeinflusst, so dass der Sensorarm einfacher auslegbar und damit die Reibung bei dem erfindungsgemäßen Molch, insbesondere in einer wie nachstehend beschriebenen Ausbildung, optimal einstellbar ist. Insbesondere ist ein Sensorarm zumindest im Wesentlichen aus einem glasfaserverstärkten Kunststoff aufgebaut, in den ein mit einem Kunststoff ummantelten Glasfaserkern versehener Lichtleiter eingebracht ist. Die mechanischen Eigenschaften von Sensorarm und Lichtleiter insbesondere hinsichtlich der Dehnung, Ermüdungsfestigkeit sowie der Krafteinleitung sind hierbei optimal aufeinander abstimmbar.

Es versteht sich, dass für einen solchen Lichtleiter eine entsprechende Intelligenz in dem Molch vorhanden ist, die typischerweise durch einen Interrogator dargestellt wird.

Zur Messung der Krümmung des Sensorarms weist der Lichtleiter, der sich insbesondere in Längsrichtung des Sensorarms erstreckt, vorzugsweise eine Mehrzahl von Bragg-Gittern auf bzw. ist dem Lichtleiter eine Mehrzahl von Bragg-Gittern zugeordnet. Die Bragg-Gitter sind insbesondere in den Lichtleiter integriert. Hierdurch kann die Krümmung des Sensorarms an einer Vielzahl von Abschnitten gemessen werden, so dass ein sehr genaues Bild der Bewegung des Sensorarms erzeugt werden kann. Dies ist insbesondere bei der Durchfahrt von Bögen vorteilhaft, wenn die Molche nicht in der Rohrmitte verlaufen, etwaig auf dem Molch angeordnete Gyroskope Fehler erhalten und diese dann durch eine genaue Lagebestimmung anhand der abschnittsweisen Krümmung der Sensorarme herausgerechnet werden können. Dies geht insbesondere einher mit dem leichten und gleichmäßig durch die Rohrleitung bewegten Molch.

Vorteilhafterweise kann der Lichtleiter mit dem Bragg-Gitter angewinkelt zur Längsachse des Sensorarms in oder an dem Sensorarm angeordnet. Hierdurch kann auch eine Torsion des Sensorarms, der üblicherweise eine blattfederartige Form aufweist, ermittelt werden. Insbesondere sind die Lichtleiter und das oder die in diesen eingeschriebenen Bragg-Gitter in einem Winkel zwischen 30° bis 60° zur Längsachse angeordnet. Eine für die Torsionsbestimmung vorzugsweise maximale Schubspannung ergibt sich in einem Winkel zwischen Längsachse des Sensorarms und der des Lichtleiters von 45°.

Neben den vorteilhafterweise blattfederartigen Ausbildungen der Sensorarme können diese auch in anderen flachen, biegeweichen Formen, vorzugsweise zur verbesserten Abdeckung der Rohrinnenseite endseitig verbreitert und gekrümmt, d.h. an die Krümmung der Rohrleitungswand angepasst, vorliegen.

Bei Ausbildung eines Sensorarms, der an seinen beiden Enden an der Zentraleinheit festgelegt ist, befinden sich zur Anlage an der Rohrinnenwand bestimmten Bereiche in etwa in der Mitte der Längserstreckung, so die Form in einer Seitenansicht z.B. einem Kreisbogen oder Ellipsenbogen entspricht.

Zur Bestimmung der Krümmung bzw. Torsion können Kalibrationskurven verwendet werden, die im Vorfeld eines Messlaufes mit den angedachten Sensorarmen bzw. hierzu identischen Sensorarmen erzeugt werden, und die über die Bestimmung der Wellenlängenverschiebungen bestimmter, verwendeter Wellenlänge bei verschiedenen Krümmungen und Torsionen des Sensorarms ermittelt werden.

Ein Faser-Bragg-Gitter wird beispielsweise über einen Bereich von rund 5 mm in den lichtleitenden Kern des Lichtleiters eingeschrieben. Dieser Bereich wird als Faser-Bragg-Sensor bezeichnet.

Vorteilhafterweise werden zur Temperaturkompensation ein oder mehrere Faser-Bragg-Sensoren nicht mit dem Sensorarm verbunden, so dass sie unbeeinflusst von der Dehnung sind und lediglich Aufschluss über die Temperatur geben. Damit keine Fehler aufgrund von Zug auf den Lichtleiter die Temperaturkompensation beeinträchtigen, sind diese Faser-Bragg-Sensoren vorzugsweise endseitig des Sensorarms oder anderweitig zugunbelastet im Sensorarm angeordnet, z.B. quer zur Längserstreckung des Sensorarms in nicht oder nur geringfügig torsionsfähigen Bereichen. Diese Faser-Bragg-Sensoren können dann vorzugsweise auch zur Temperaturbestimmung verwendet werden.

Gemäß einer weiteren vorteilhaften Ausbildung eines erfindungsgemäßen Molches wird der Lichtleiter, der eine Ein- oder Mehrzahl von lichtleitenden Fasern aufweisen kann, durch eine Mehrzahl der Sensorarme durchgeschleift. Bei der Verwendung von Bragg-Gittern kann insbesondere nur eine lichtleitende Faser verwendet werden, bei der die Variation des Lichts durch die Verwendung der unterschiedlichen Bragg-Gitter Aufschluss über die Form der durchlaufenden Sensorarme gibt. Das Durchschleifen des Lichtleiters durch eine Mehrzahl der Sensorarme sorgt für einen einfachen Aufbau und eine prozesssicherere Montage. Gleichzeitig ist die Anzahl der möglichen Fehlerquellen durch die Reduzierung der Anzahl der notwendigen Ausgänge in die Auswerteelektronik reduziert.

Entsprechend ist es vorteilhaft für jeweils einen Sensorkranz jeweils einen Lichtleiteranschluss zu einem Interrogator für zu- und abgehendes Licht vorzusehen. Das eingestrahlte Licht wird von den Faser-Bragg-Sensoren je nach Dehnung und/oder Torsion des Sensorarms variiert und in Richtung des Lichtleiteranschlusses reflektiert. Der Lichtleiter kann im Sensorkranz somit ein offenes Ende aufweisen, welches insbesondere zur Temperaturkompensation verwendbar ist.

Während es möglich ist, in oder an jeden Sensorarm einen einzelnen Lichtleiter mit einer eigenen Abfrageeinheit (Interrogator) zu legen, kann in einer weiteren erfindungsgemäßen Ausbildung die Anzahl der Lichtleiteranschlüsse je nach verwendetem Interrogator bzw. je nach verwendeten Interrogatoren niedrig, d.h. vorzugsweise im einstelligen Bereich bleiben, so dass entweder eine Redundanz durch parallel laufende Lichtleiter in den jeweiligen Sensorarmen erreicht wird oder in Umfangsrichtung einzelne Abschnitte eines Sensorkranzes von jeweiligen Lichtleitern durchlaufen werden.

In einem Verbindungsbereich ist der Anschluss des Lichtleiters insbesondere über einen GFK-Elastomer-Verbund vorgesehen. Ein solcher Übergang aus einem beispielsweise aus einem Glasfaserkunststoff aufgebauten Sensorarm mit einem entsprechend integrierten Lichtleiter verhindert starke Knicke und eine unzulässige Belastung des Lichtleiters.

Vorzugsweise ist der Interrogator zur Auswertung des Lichtsignals druckvergossen, so dass die Verwendung von Druckkammern bzw. Druckkörpern, die insbesondere mittels metallischer Werkstoffe erzeugt werden, vermieden werden kann. Entsprechend ist der Molch leichter auszubilden und für Niedrigdruckgasleitungen unterhalb von Betriebsdrücken von 10 bar (1 MPa) verwendbar.

Bevorzugt ist zumindest ein Sensorarm von der Zentraleinheit entfernt mit einer der Dichteinheiten verbunden. Besonders bevorzugt sind alle Sensorarme eines Sensorkranzes einer in Umfangsrichtung um eine Längsmittelachse herumlaufende Sensorarme aufweisenden Sensorvorrichtung mit der anliegenden Dichteinheit verbunden.

Der bzw. die Sensorarme sind insbesondere endseitig und zumindest in einem von der zentralen Mittelachse des Molches in der Rohrleitung am weitesten beabstandeten Bereich entweder unmittelbar zur Anlage an eine Rohrinnenseite oder mit einem endseitigen Sensorarmmodul zur Anlage an der Rohrinnenseite ausgebildet. Durch die Verbindung der insbesondere vorderen oder hinteren Dichteinheit mit dem oder den Sensorarmen ist ein Koppelmechanismus geschaffen, durch den auf die Dichteinheit wirkende Differenzdrücke und hiermit einhergehende Radialkräfte einen Einfluss auf die Anlage der Sensorarme bzw. den hiervon getragenen Modulen haben. Durch einen solchen Koppelmechanismus können die durch Anlagebereiche des Molches an der Rohrleitungsinnenseite entstehenden Kräfte im Sinne eines gleichmäßigen und ruhigen Molchlaufs positiv beeinflusst werden. Ein entsprechend weitergebildeter Molch ist somit dazu geeignet, bessere Messergebnisse zu produzieren.

Bei der Dichteinheit handelt es sich vorzugsweise nicht um eine gerade Scheibe ("Disc"), sondern um eine Dichteinheit mit einer nicht ausschließlich senkrecht zur Längsmittelachse des Molches verlaufenden flächigen Erstreckung ("Cup").

Die Längsmittelachse des Molches ist die Achse, die parallel zu oder deckungsgleich in einer horizontal verlaufenden Rohrleitung mit deren Längsachse verläuft.

Vorteilhafterweise ist die Verbindung zwischen Sensorarm und Dichteinheit über einen biegsamen Abschnitt des Sensorarms von der Zentraleinheit entfernt angeordnet, so dass der Einfluss der aufgrund von Differenzdrücken auf die Dichteinheit wirkenden Kräfte auf den Sensorarm größer ist. Die Sensorarme sind im zentraleinheitnahen und längsmittelachsennahen Bereich in der Regel etwas steifer ausgebildet, so dass eine dort sitzende Verbindung weniger Einfluss auf die Ausrichtung des Sensorarms besitzt. Vorteilhafterweise ist der Verbindungsbereich zwischen Sensorarm und Dichteinheit in der von der Längsmittelachse des Molches betrachtet äußeren Hälfte des Sensorarms angeordnet, vorzugsweise im äußerem Drittel.

Die Dichteinheit weist in eine Längsrichtung des Molches betrachtet wenigstens ein um die Zentraleinheit herumführendes Flächenelement auf, welches insbesondere von dem Sensorarm mit aufgespannt wird. Die Sensorarme geben der Dichteinheit eine gewisse Form oder unterstützen diese zumindest. Das Flächenelement übernimmt die sonst von herkömmlichen Cups oder Disks ausgeübte Dichtungsfunktion und erstreckt sich in Längsrichtung betrachtet in üblicher Weise von der Zentraleinheit weg konzentrisch nach außen. Es weist in dieser Richtung betrachtet einen auf die jeweilige Rohrinnenwand angepassten Durchmesser auf.

Eine jeweilige Dichteinheit ist zur Längsmittelachse des Molches in üblicher Weise an der Zentraleinheit befestigt, z.B. angeflanscht. Die Zentraleinheit weist oftmals insbesondere druckgekapselte Bereiche für Elektronik auf und stellt eine Verbindung zwischen beispielsweise einem vorderen und einem hinteren Dicht- und/oder Stützelement her. Beispielsweise ist eine vordere oder eine hintere Dichteinheit erfindungsgemäß mit einem oder mehreren Sensorarmen verbunden, wobei sich für die Sensoreinheit(en) eine 2-Punkt-Abstützung an der Zentraleinheit ergibt, während die dann etwaig vorhandene weitere Dichteinheit gegebenenfalls ohne zusätzliche Anbindung an einen oder mehrere Sensorarme ebenfalls an der Zentraleinheit angeordnet ist. Ebenfalls kann in der Zentraleinheit ergänzend zu einer erfindungsgemäßen Ausgestaltung eines Molches ein Mittel zur Geschwindigkeitskontrolle, z.B. in Form eines regulierbaren Bypasses, angeordnet sein. Hierdurch werden aufgrund des dann möglichen, gut kontrollierten, gleichmäßigen Laufs im Betrieb erfasste Sensordaten qualitativ besonders gut.

Dichteinheit und Sensorarm können einen Verbindungsbereich dergestalt aufweisen, dass sie ständig miteinander verbunden sind oder auch nur aneinander anliegen und dann in einem Differenzdruckfall sich im Sinne einer Kraftübertragung gegenseitig beeinflussen.

Während bei herkömmlichen Cups im Falle einer Differenzdruckerhöhung die Reibung an der Rohrinnenseite durch die Form der Cups erhöht wird, weist die Dichteinheit auf ihrer in Fahrtrichtung nach vorne weisenden Seite wenigstens eine Fläche auf, deren Flächennormale in einem Längsschnitt betrachteten in Richtung der Längsachse des Molches geneigt ist. Hierdurch wird ein durch den Differenzdruck entstehendes Reibungsmoment nicht weiter erhöht. Vielmehr wird resultierend eine Axialkraft erzeugt, durch die eine vom Differenzdruck erzeugte Reibungserhöhung mit dem Ziel eines gleichmäßigen Vortriebs kompensiert wird.

Ein besonders gleichmäßiger Lauf wird erreicht, wenn endseitig des Sensorarms ein insbesondere als Rad ausgebildetes Mittel zur Führung des Molches vorhanden ist. Alternativ kann an dieser Stelle auch ein Sensormodul oder ein insbesondere mit einer Keramik versehenes Abstützelement vorhanden sein, welches auch durch den Sensorarm selbst ausgebildet sein kann. Die Dichteinheit, die in Längsrichtung betrachtet einen freien Rohrleitungsquerschnitt im Wesentlichen abdichtet, kann ungeachtet der Verbindung auf die Dichtaufgaben beschränkt bleiben, während die Sensorarme mit dem außenliegenden Mittel zur Führung des Molches entsprechend die Führung desselben bewirken. Insbesondere in Bogendurchgängen der Rohrleitung, in denen Reibung-erzeugende Verkantungen der Dichtebenen entstehen, wird durch die erfindungsgemäße Kopplung von Dichteinheit und Führungsmittel aufweisenden Sensorarmen ein gleichmäßigerer Lauf erzeugt.

Zwecks eines einfachen Aufbaus des Molches und Auslegung auf die zu jeweils zu durchfahrende Rohrleitung ist es weiterhin vorteilhaft, wenn die Dichteinheit und die damit verbundenen Sensorarme ein auf der Zentraleinheit vorzugsweise lösbar festgelegtes Modul ausbilden.

Vorzugsweise weist die Zentraleinheit einen im Betrieb in der Rohrleitung zumindest im Wesentlichen differenzdrucklosen Innenbereich auf, die besonders vorzugsweise aus einem insbesondere durch Fasern verstärkten Kunststoff ausgebildet ist. Ein solcher Molch, der keine Schaumstoffpfropfen als Dichtelemente aufweist und keinen metallischen Druckkörper bzw. keine metallische Druckkammer umfasst, kann weitgehend unter Verzicht auf metallische Wandelemente aufgebaut werden und ist entsprechend gut für Niedrigdruckgasleitungen verwendbar.

Zur Ausbildung einer Zentraleinheit mit einem differenzdrucklosen Innenbereich weist diese Ausnehmungen auf. Entsprechend stellt sich in dem radial von der Längsmittelachse des Molches und den Ausnehmungen weiter außen liegenden Umgebungsbereich und dem Innenbereich ein zumindest nahezu identischer Druck ein. Beispielhaft kann die Zentraleinheit eine Vielzahl von Ausnehmungen aufweisen, d.h., skelettartig aufgebaut sein oder auch mit Kunststoffstäben aufgebaut sein. Vorzugsweise sind insbesondere der Sensorarm und/oder die Zentraleinheit aus einem insbesondere durch Fasern verstärkten Kunststoff bzw. Kunststoffmaterial ausgebildet. Als Kunststoffe bzw. Kunststoffmaterial können somit insbesondere Glasfaserkunststoffe aber auch Kohlenstofffaser-verstärkter Kunststoff, Aramidfaserverstärkter Kunststoff, Polyamid oder Polyetheretherketon verwendet werden. Die Materialien der eingangs beschriebenen Moduleinheit mit Sensorarmen und Dichteinheit umfassen somit vorzugsweise ein Polyurethan, insbesondere auch faserverstärktes Polyurethan, für das Flächenelement der Dichteinheit sowie ein Glasfasermaterial für die Sensorarme, in denen oder an denen der Lichtleiter vorhanden ist.

Zwecks weiterer Optimierungen der elastischen Eigenschaften des Sensorarms kann dieser zumindest einseitig mit einer Dämpfungsschicht versehen sein, über die insbesondere die Eigenschwingungen des Sensorarms gedämpft werden und Schwingungsenergie in Wärme umgewandelt wird. Die Dämpfungsschicht ist vorzugsweise aus einem Polyurethan aufgebaut und insbesondere hinsichtlich seiner Dämpfungseigenschaften auf die Eigenschwingungen des Sensorarms abstimmbar. Sie ist vorzugsweise 1 bis 2 mm dick und wird flächig bezüglich der Fahrtrichtung des Molches auf der Rückseite des Sensorarms aufgebracht. Sie bedeckt vorzugsweise zumindest im Wesentlichen, insbesondere vollständig, die rückwärtige Oberfläche.

Weiterhin ist es von Vorteil, wenn der Molch eine druckkammerlos angeordnete Energiespeichereinheit aufweist, um auch bei einem Verzicht auf die Druckkörper, die aus Metall ausgebildet sind, einen leichten Molch zu schaffen.

Weitere Vorteile und Einzelheiten der Erfindung sind der nachfolgenden Figurenbeschreibung zu entnehmen. Schematisch dargestellt zeigt:
- Fig. 1: einen erfindungsgemäßen Gegenstand in einer Seitenansicht,
- Fig. 2: den Gegenstand nach Fig. 1 in einer perspektivischen Ansicht,
- Fig. 3: den Gegenstand nach Fig. 1 in einem Längsschnitt,
- Fig. 4: ein weiteres Ausführungsbeispiel der Erfindung in einer perspektivischen Darstellung,
- Fig. 5: den Gegenstand nach Fig. 4 in einem Längsschnitt,
- Fig. 6: einen Teil einer Sensorvorrichtung eines erfindungsgemäßen Gegenstands,
- Fig. 7: einen Teil einer Sensorvorrichtung eines weiteren erfindungsgemäßen Gegenstands.

Einzelne technische Merkmale der nach beschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

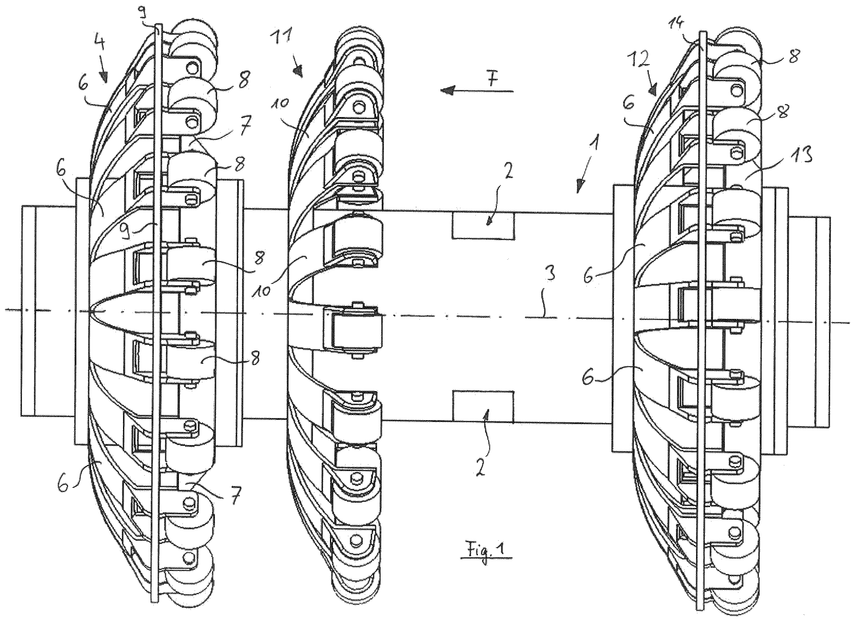

Ein erfindungsgemäßer Molch ist in Fig. 1 gemäß einem ersten Ausführungsbeispiel in einer Seitenansicht dargestellt. Ungeachtet dessen ist durchscheinend eine Längsmittelachse des Molches eingezeichnet. Diese geht in einem unbelasteten Zustand der Führungselemente zumindest nahezu identisch einher mit der Längsmittelachse einer Rohrleitung, durch die der vorliegend als Inspektionsmolch ausgebildete Molch hindurchfährt.

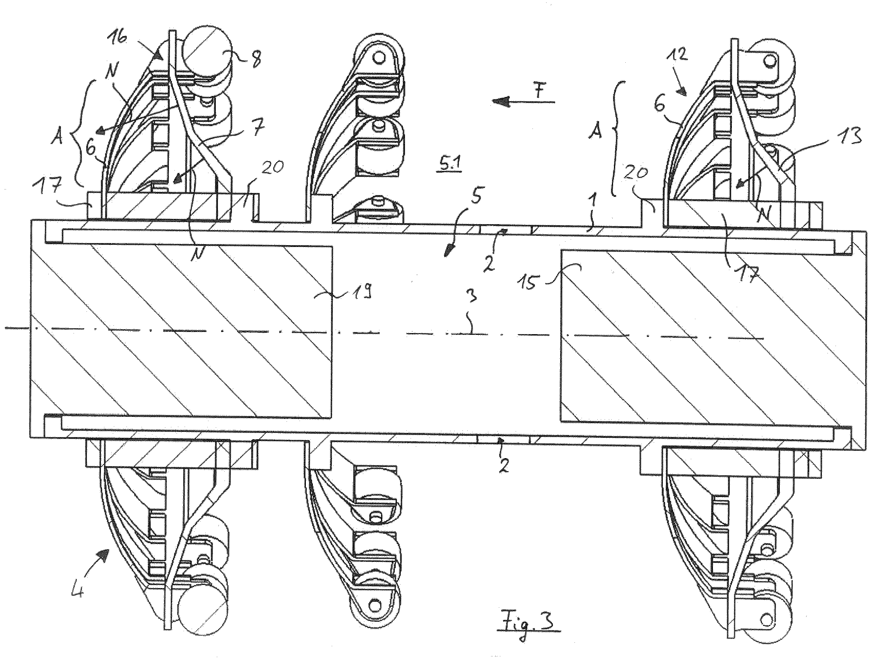

Der Molch weist eine Zentraleinheit 1 auf, die vorliegend mit zwei Ausnehmungen 2 versehen ist, durch die ein außerhalb der Zentraleinheit 1 zwischen den Dichtelementen anliegender Druck auch im Inneren der Zentraleinheit vorliegt. Der Molch ist somit im Betrieb zumindest im Wesentlichen differenzdrucklos ausgebildet, im optimalen Fall komplett differenzdrucklos hinsichtlich einer an die Ausnehmungen 2 angrenzenden äußeren Umgebung des Molches in der Rohrleitung (Fig. 3). Ein Innenbereich 5 weist einen hierzu nahezu bzw. komplett identischen Druck zu dem an die Ausnehmungen angrenzenden äußeren Bereich 5.1 auf. Der Molch weist weiterhin eine Längsmittelachse 3 auf, die bei einer Fahrt durch einen linearen Rohrleitungsabschnitt parallel ausgebildet ist zur Fahrtrichtung F. Bezüglich der Fahrtrichtung F gibt es einen vorderen Sensorkranz 4 umfassend mehrere Sensorarme 6, die mit einer vorderen Dichteinheit 7 verbunden sind. Die Sensorarme 6 sind Teil einer Sensorvorrichtung, die vorliegend zur Bestimmung der Geometrie der Innenoberfläche der Rohrleitung ausgebildet ist. Endseitig der Sensorarme 6 sind Rollen 8 als Führungsmittel angeordnet, die über eine als Teil des Sensorarms ausgebildete bzw. mit diesem verbundene Halterung an diesem sowie an der Dichteinheit 7 angeordnet sind.

Vorzugsweise können noch weitere insbesondere aus GFK-Material ausgebildete Federarme als Führungsarme bzw. Führungsmittel an der Zentraleinheit angeordnet sein.

In Fahrtrichtung betrachtet sind die Sensorarme 6 im Wesentlichen vor der Dichteinheit 7 angeordnet, lediglich die Halterung der Rollen 8 sowie die Rollen selbst sind hinter der durch eine Kante 9 umfangsseitig begrenzte Dichtebene angeordnet.

Ein weiterer Sensorkranz 11 ist hinter der vorderen Dichteinheit angeordnet. Dessen Sensorarme 10 können aus einem anderen Kunststoffmaterial ausgebildet sein als die vorderen Sensorarme 6 und insbesondere auch als die Zentraleinheit 1.

Ein hinterer Sensorkranz 12 ist Teil einer weiteren Sensorvorrichtung, die mit einer hinteren Dichteinheit 13 verbunden ist. Sowohl die vordere Dichteinheit 7 als auch die hintere Dichteinheit 13 weisen die erfindungsgemäße Verbindung zwischen Sensorarm und Dichteinheit auf, so dass eine optimale Regulierung der durch die Rollen ausgebildeten Mittel 8 zur Führung ohnehin bereits reduzierten Reibung bewirkt wird. Auch die Sensorarme 6 des hinteren Sensorkranzes 12 weisen Räder 8 auf, die in Fahrtrichtung hinter der umfangsseitigen Stirnkante 14 der hinteren Dichteinheit 13 angeordnet sind.

Sowohl die vordere Dichteinheit 7 als auch die hintere Dichteinheit 13 weisen eine Verbindung mit den Sensorarmen 6 auf, die über einen biegsamen Abschnitt A jeweils von der Zentraleinheit 1 beabstandet sind. Die Dichteinheiten 7 und 13 sind aus Polyurethan aufgebaut und weisen ein in Längsrichtung des Molches betrachtet um die Zentraleinheit 1 herumführendes Flächenelement auf, dieses wird über die Verbindung 16 zwischen Sensorarm und Dichteinheit mit aufgespannt. Auf ihrer bezogen auf die Fahrtrichtung F nach vorne weisenden Seite weisen sowohl die Dichteinheit 7 als auch die Dichteinheit 13 Flächen bzw. Abschnitte des Flächenelements auf, deren Flächennormalen N in Richtung der Längs(mittel)achse 3 weisen bzw. zu dieser hin angewinkelt sind. Bei der Erhöhung von hinter dem Molch befindlichen Drücken aufgrund von beispielsweise Schweißnähten oder Bogendurchgängen wird durch den erhöhten Differenzdruck der erhöhten Reibung an den äußeren umfangsseitigen Stirnkanten 9 und 14 des jeweiligen Flächenelements sowie den Rädern 8 entgegengewirkt, so dass etwaige Passagen gut über- bzw. durchfahren werden können.

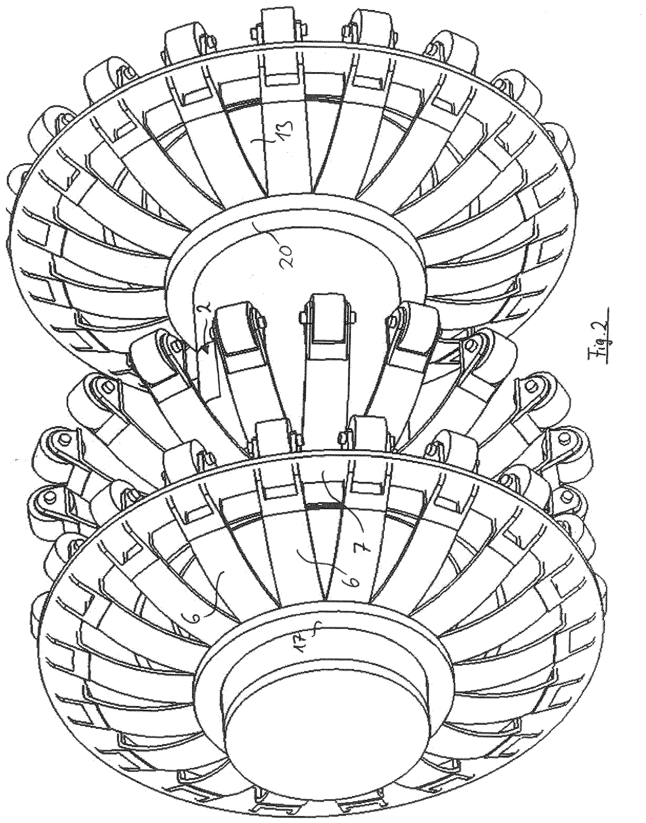

Dargestellt ist des Weiteren der modulartige Aufbau des Molches mit einer Zentraleinheit 1 sowie den aufgeklebten oder auch lösbar befestigten Modulen aus Dichteinheit 7 und dem zugehörigen Sensorkranz 4 bzw. 12, die beide vorzugsweise in einer aus PU gefertigten Basis 17 des Moduls angeordnet sind (Fig. 2 bis 4) Diese sind bis zu Anschlägen 20 auf die Zentraleinheit aufgeschoben.

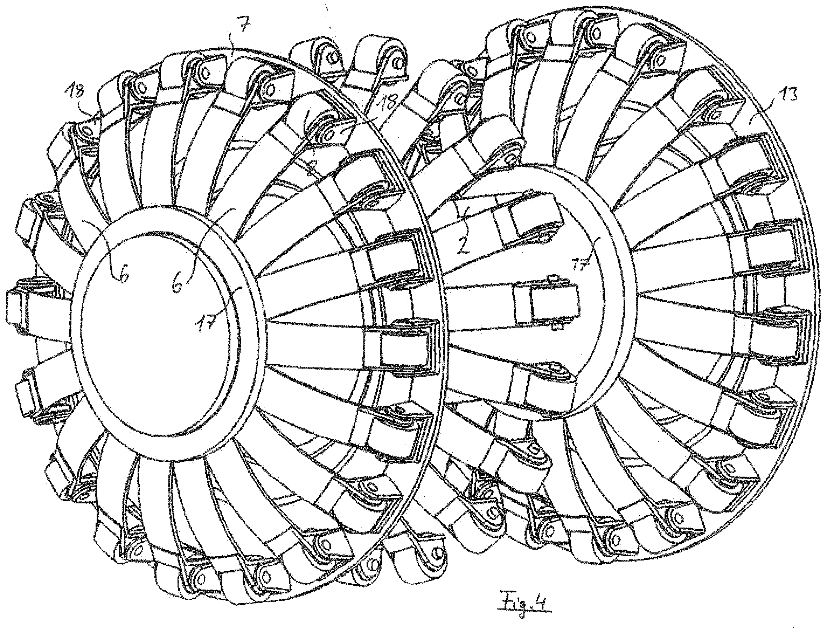

Gemäß einem weiteren Ausführungsbeispiel der Erfindung sind die Sensorarme 6 ebenfalls wieder mit den Dichteinheiten 7 und 13 verbunden, allerdings befinden sich nun die als Rollen ausgebildeten Führungsmittel 8 auf der nach vorne gerichteten Seite der Dichteinheit (Fig. 4). Die Verbindung zwischen Sensorarm 6 und Dichteinheit 7 bzw. 13 erfolgt über eine auf der vorzugsweise aus Polyurethan hergestellten Dichteinheit aufgeklebten und/oder aufgeschraubten, im Wesentlichen U-förmigen Halterung 18. Diese ist vorzugsweise gelenkig mit insbesondere der Drehachse der Rolle als Schwenkachse am Sensorarm 6 festgelegt (Fig. 4).

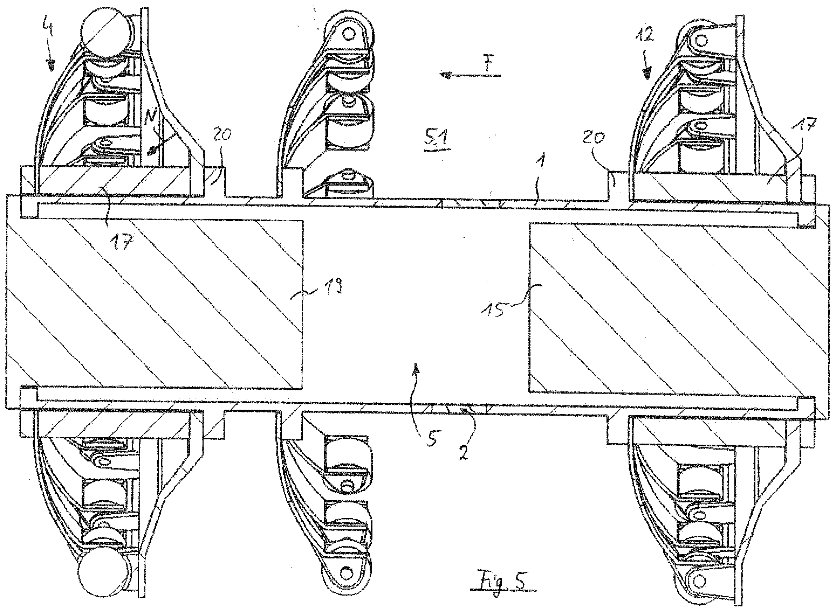

Beide Ausführungsbeispiele weisen zwei in die druckdifferenzlose Zentraleinheit 1 eingeklebte, vergossene Elektronikblöcke 15 und 19 auf. Beide Elektronikblöcke 15, 19 weisen jeweils einen Interrogator (nicht dargestellt) zwecks Abfrage der in den Sensorkränzen 4 und 12 vorhandenen Lichtleiter sowie zugehörige Elektronik- und Energiespeichereinheiten auf (Fig. 5).

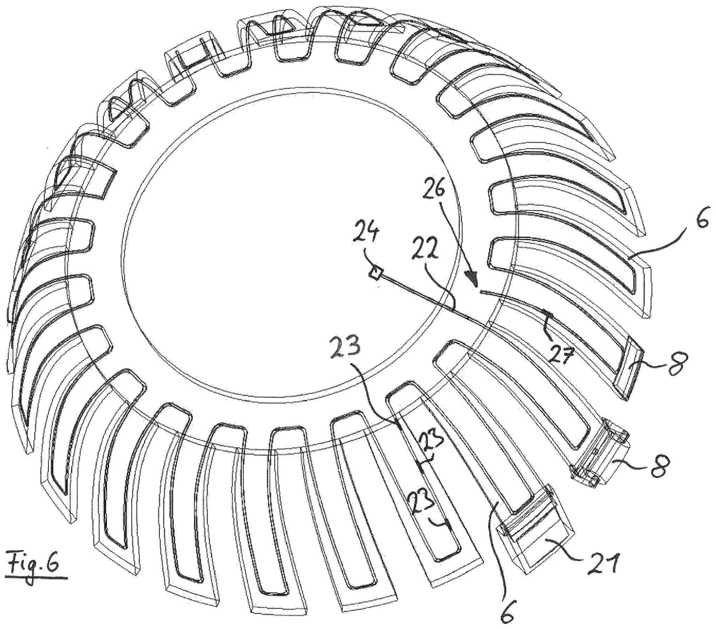

In Fig. 6 ist ein Sensorkranz mit verschiedenen außenliegenden Modulen bestückt dargestellt. Neben einer Sensoreinheit 21 zur Untersuchung der Rohrleitungswand auf Fehlstellen sind als Führungsmittel 8 einerseits eine Rolle sowie andererseits eine einfache Keramikscheibe angeordnet.

Ein einziger Lichtleiter 22 mit einer Mehrzahl von Bragg-Gittern 23 in jedem Sensorarm (nur teilweise dargestellt) ist durch sämtliche Sensorarme 6 des Sensorkranzes durchgeschleift und weist daher lediglich einen Anschlussbereich 24 auf. Dieser Anschlussbereich ist über einen GFK-PU-Verbundbereich in den PU der jeweiligen Basis hineingeführt, so dass eine möglichst beschädigungsfreie Durchführung in den jeweiligen Interrogator des Blockes 19 oder 15 ermöglicht wird. Alternativ kann auch ein Interrogator mit einem Multiplexer eine Mehrzahl von Sensorkränzen auswerten.

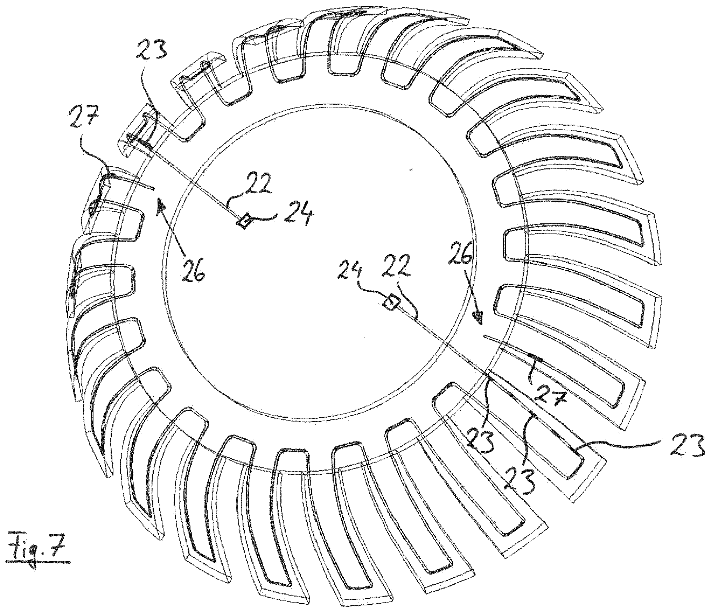

Nach Fig. 7 kann ein Sensorkranz auch in Umfangsrichtung nacheinander angeordnete Lichtleiter aufweisen. In diesem Fall sind zwei Lichtleiteranschlüsse 24 notwendig. Bei diesem Aufbau kann bei Ausfall eines Lichtleiters noch über die andere Hälfte des Sensorkranzes gemessen werden. Wie auch im Ausführungsbeispiel nach Fig. 6 weisen die Lichtleiter nach Fig. 7 offene Enden 26 auf, deren zugehöriger Faser-Bragg-Sensor 27 zur Temperaturbestimmung und -kompensation nicht verklebt ist.

## Patentansprüche

1. Molch für Rohrleitungen, insbesondere in Form eines Reinigungs- oder Inspektionsmolchs, mit einer Zentraleinheit (1) und zumindest einer in Längsrichtung der Zentraleinheit vorderen und einer hinteren Dichteinheit (7,13) sowie mit wenigstens einer eine Mehrzahl von Sensorarmen (6) aufweisenden Sensorvorrichtung, die insbesondere zur Messung einer Geometrie oder Beschaffenheit der Rohrleitung vorgesehen ist, wobei zumindest eine der Dichteinheiten (7,13) und vorzugsweise die Zentraleinheit zumindest abschnittsweise aus einem Kunststoffmaterial gefertigt sind, **dadurch gekennzeichnet, dass** die Sensorvorrichtung zumindest einen in dem oder entlang des Sensorarms (6) verlaufenden Lichtleiter (22) aufweist, der zur Messung der Krümmung eines Sensorarms ausgebildet ist.

2. Molch nach Anspruch 1, **dadurch gekennzeichnet, dass** dem Lichtleiter (22) zur Messung der Krümmung und Torsion des Sensorarms zumindest ein Bragg-Gitter (23), vorzugsweise eine Mehrzahl von Bragg-Gittern (23), zugeordnet ist.

3. Molch nach Anspruch 1 oder 2, **dadurch gekennzeichnet, dass** der Lichtleiter (22) durch eine Mehrzahl der Sensorarme (6) durchgeschleift ist.

4. Molch nach einem der vorherigen Ansprüche, **dadurch gekennzeichnet, dass** die Sensorvorrichtung in Form eines Sensorkranzes ausgebildet ist und ein Interrogator vorgesehen ist, wobei für den Sensorkranz (4,12) nur jeweils ein Lichtleiteranschluss zu dem Interrogator für zu und abgehendes Licht vorgesehen ist.

5. Molch nach Anspruch 4, **dadurch gekennzeichnet, dass** der Lichtleiteranschluss über einen GFK-Elastomer-Verbund erfolgt.

6. Molch nach Anspruch 4 oder 5, **dadurch gekennzeichnet, dass** der Interrogator druckvergossen ist.

7. Molch nach einem der vorherigen Ansprüche, **dadurch gekennzeichnet, dass** zumindest ein Sensorarm (6) von der Zentraleinheit (1) entfernt mit einer der Dichteinheiten (7,13) verbunden ist.

8. Molch nach Anspruch 7, **dadurch gekennzeichnet, dass** die Verbindung zwischen Sensorarm (6) und Dichteinheit (7,13) über einen biegsamen Abschnitt (A) des Sensorarms (6) von der Zentraleinheit (1) entfernt angeordnet ist.

9. Molch nach einem der vorherigen Ansprüche, **dadurch gekennzeichnet, dass** die Dichteinheiten (7,13) wenigstens ein in Längsrichtung des Molches betrachtet um die Zentraleinheit (1) herumführendes Flächenelement aufweisen.

10. Molch nach Anspruch 7 oder 8, **dadurch gekennzeichnet, dass** die Dichteinheit (7,13) von dem Sensorarm (6) mit aufgespannt wird.

11. Molch nach einem der vorherigen Ansprüche, **dadurch gekennzeichnet, dass** die Dichteinheiten (7,13) auf ihrer in Fahrtrichtung nach vorne weisenden Seite wenigstens eine Fläche aufweisen, deren Flächennormale (N) in einem Längsschnitt betrachtet in Richtung der Längsachse (3) des Molches geneigt ist.

12. Molch nach einem der vorherigen Ansprüche, **dadurch gekennzeichnet, dass** die Sensorarme (6) endseitig wenigstens ein insbesondere als Rad ausgebildetes Mittel (8) zur Führung des Molches aufweisen.

13. Molch nach einem der vorherigen Ansprüche unter Einschluss von Anspruch 7, **dadurch gekennzeichnet, dass** eine Mehrzahl von Sensorarmen von der Zentraleinheit (1) entfernt mit einer der Dichteinheiten (7,13) verbunden sind, wobei die Dichteinheit (7,13) und die damit verbundenen Sensorarme (6) ein auf der Zentraleinheit (1) vorzugsweise lösbar festgelegtes Modul ausbilden.

14. Molch nach einem der vorherigen Ansprüche, **dadurch gekennzeichnet, dass** die Zentraleinheit (1) einen im Betrieb in der Rohrleitung zumindest im Wesentlichen differenzdrucklosen Innenbereich (5) aufweist und vorzugsweise aus einem insbesondere durch Fasern verstärkten Kunststoff ausgebildet ist.

15. Molch nach Anspruch 14, **dadurch gekennzeichnet, dass** die Zentraleinheit (1) Ausnehmungen aufweist.

16. Molch nach einem der vorherigen Ansprüche, **dadurch gekennzeichnet, dass** die Sensorarme (6) aus einem insbesondere durch Fasern verstärkten Kunststoff ausgebildet sind.

17. Molch nach einem der vorherigen Ansprüche, **dadurch gekennzeichnet, dass** die Sensorarme (6) zumindesteinseitig mit einer Dämpfungsschicht ausgebildet sind.

18. Molch nach einem der vorherigen Ansprüche, **dadurch gekennzeichnet, dass** der Molch eine druckkammerlos angeordnete Energiespeichereinheit aufweist.

## Claims

1. Pipeline pig, in particular in the form of a cleaning or inspection pig, having a central unit (1) and at least one, in the longitudinal direction of the central unit, front and a rear sealing unit (7, 13), and having at least one sensor device which has a plurality of sensor arms (6) and is provided in particular for the measurement of a geometry or condition of the pipeline, wherein at least one of the sealing units (7, 13) and preferably the central unit are produced from a plastic material at least in portions, **characterized in that** the sensor device comprises at least one light guide (22) which extends in or along the sensor arm (6) and is designed for the measurement of the curvature of a sensor arm.

2. Pig according to Claim 1, **characterized in that** the light guide (22) for the measurement of the curvature and torsion of the senor arm is assigned at least one Bragg grating (23), preferably a plurality of Bragg gratings (23) .

3. Pig according to Claim 1 or 2, **characterized in that** the light guide (22) is looped through a plurality of the sensor arms (6).

4. Pig according to any of the preceding claims, **characterized in that** the sensor device is embodied in the form of a sensor rim and an interrogator is provided, wherein for the sensor rim (4, 12) only one light guide connection to the interrogator for incoming and outgoing light is provided in each case.

5. Pig according to Claim 4, **characterized in that** the light guide connection is implemented by way of a GRP elastomer composite.

6. Pig according to Claim 4 or 5, **characterized in that** the interrogator is pressure grouted.

7. Pig according to any of the preceding claims, **characterized in that** at least one sensor arm (6), distant from the central unit (1), is connected to one of the sealing units (7, 13).

8. Pig according to Claim 7, **characterized in that** the connection between sensor arm (6) and sealing unit (7, 13) is arranged distantly from the central unit (1) via a flexible portion (A) of the sensor arm (6).

9. Pig according to any of the preceding claims, **characterized in that** the sealing units (7, 13) comprise at least one areal element which, viewed in the longitudinal direction of the pig, is led about the central unit (1).

10. Pig according to Claim 7 or 8, **characterized in that** the sealing unit (7, 13) is also stretched by the sensor arm (6).

11. Pig according to any of the preceding claims, **characterized in that** the sealing units (7, 13) on their side facing to the front in the travelling direction comprise at least one face, the surface normal (N) of which viewed in a longitudinal section is inclined in the direction of the longitudinal axis (3) of the pig.

12. Pig according to any of the preceding claims, **characterized in that** the sensor arms (6) on the end side comprise at least one means (8) which serves to guide the pig and is designed in particular as a wheel.

13. Pig according to any of the preceding claims with the inclusion of Claim 7, **characterized in that** a plurality of sensor arms are connected distantly from the central unit (1) to one of the sealing units (7, 13), wherein the sealing unit (7, 13) and the sensor arms (6) connected therewith form a module which is preferentially detachably fixed to the central unit (1).

14. Pig according to any of the preceding claims, **characterized in that** during the operation the central unit (1) in the pipeline comprises an at least substantially differential pressure-less inner region (5) and is preferably formed from a plastic that is reinforced in particular by fibres.

15. Pig according to Claim 14, **characterized in that** the central unit (1) comprises recesses.

16. Pig according to any of the preceding claims, **characterized in that** the sensor arms (6) are formed from a plastic that is reinforced in particular by fibres.

17. Pig according to any of the preceding claims, **characterized in that** the sensor arms (6) are formed with a damping layer at least on one side.

18. Pig according to any of the preceding claims, **characterized in that** the pig comprises an energy storage unit that is arranged without a pressure chamber.

## Revendications

1. Écouvillon destiné à des canalisations, se présentant notamment sous la forme d'un écouvillon de nettoyage ou d'inspection, ledit écouvillon comprenant une unité centrale (1) et au moins une unité d'étanchéité avant et une unité d'étanchéité arrière (7, 13) par référence à la direction longitudinale de l'unité centrale et au moins un dispositif de détection comportant une pluralité de bras de détection (6) et prévu notamment pour mesurer une géométrie ou un état de la canalisation, au moins une des unités d'étanchéité (7, 13) et de préférence l'unité centrale étant réalisées au moins par portions en matière synthétique, **caractérisé en ce que** le dispositif de détection comporte au moins un guide de lumière (22) qui s'étend dans le bras de détection (6) ou le long de celui-ci et qui est conçu pour mesurer la courbure d'un bras de détection.

2. Écouvillon selon la revendication 1, **caractérisé en ce qu'**au moins un réseau de Bragg (23), de préférence une pluralité de réseaux de Bragg (23), est associé au guide de lumière (22) pour mesurer la courbure et la torsion du bras de détection.

3. Écouvillon selon la revendication 1 ou 2, **caractérisé en ce que** le guide de lumière (22) est bouclé à travers une pluralité de bras de détection (6) .

4. Écouvillon selon l'une des revendications précédentes, **caractérisé en ce que** le dispositif de détection est conçu sous la forme d'une couronne de détection et un interrogateur est prévu, une seule connexion de guide de lumière à l'interrogateur pour la lumière entrante et sortante étant prévue pour la couronne de détection (4, 12).

5. Écouvillon selon la revendication 4, **caractérisé en ce que** le guide de lumière est relié par le biais d'un composite élastomère-matière synthétique renforcée par des fibres de verre.

6. Écouvillon selon la revendication 4 ou 5, **caractérisé en ce que** l'interrogateur est moulé sous pression.

7. Écouvillon selon l'une des revendications précédentes, **caractérisé en ce qu'**au moins un bras de détection (6) est relié à l'une des unités d'étanchéité (7, 13) à distance de l'unité centrale (1).

8. Écouvillon selon la revendication 7, **caractérisé en ce que** la liaison entre le bras de détection (6) et l'unité d'étanchéité (7, 13) est disposée à distance de l'unité centrale (1) par le biais d'une portion flexible (A) du bras de détection (6).

9. Écouvillon selon l'une des revendications précédentes, **caractérisé en ce que** les unités d'étanchéité (7, 13) comportent au moins un élément de surface qui s'étend autour de l'unité centrale (1), par référence à la direction longitudinale de l'écouvillon.

10. Écouvillon selon la revendication 7 ou 8, **caractérisé en ce que** l'unité d'étanchéité (7, 13) est également enserrée par le bras de détection (6).

11. Écouvillon selon l'une des revendications précédentes, **caractérisé en ce que** les unités d'étanchéité (7, 13) comportent sur leur côté dirigé vers l'avant dans le sens de déplacement au moins une surface dont la normale (N) est inclinée en direction de l'axe longitudinal (3) de l'écouvillon par référence à une vue en coupe longitudinale.

12. Écouvillon selon l'une des revendications précédentes, **caractérisé en ce que** les bras de détection (6) comportent côté extrémité au moins un moyen (8) de guidage de l'écouvillon qui est conçu notamment sous la forme d'une roue.

13. Écouvillon selon l'une des revendications précédentes, notamment la revendication 7, **caractérisé en ce qu'**une pluralité de bras de détection sont reliés à l'une des unités d'étanchéité (7, 13) à distance de l'unité centrale (1), l'unité d'étanchéité (7, 13) et les bras de détection (6) reliés à celle-ci formant un module qui est fixé de préférence de manière amovible sur l'unité centrale (1).

14. Écouvillon selon l'une des revendications précédentes, **caractérisé en ce que** l'unité centrale (1) comporte une zone intérieure (5) qui est au moins sensiblement sans pression différentielle lors du fonctionnement dans la canalisation et est conçue de préférence en matière synthétique notamment renforcée par des fibres.

15. Écouvillon selon la revendication 14, **caractérisé en ce que** l'unité centrale (1) comporte des évidements.

16. Écouvillon selon l'une des revendications précédentes, **caractérisé en ce que** les bras de détection (6) sont conçus en matière synthétique notamment renforcée par des fibres.

17. Écouvillon selon l'une des revendications précédentes, **caractérisé en ce que** les bras de détection (6) sont conçus avec une couche d'amortissement au moins d'un côté.

18. Écouvillon selon l'une des revendications précédentes, **caractérisé en ce que** l'écouvillon comporte une unité de stockage d'énergie disposée sans chambre de pression.
